# EUROPEAN PATENT APPLICATION

(11) **EP 2 595 066 A1**
(43) Date of publication of application: **22.05.2013**
(21) Application number: 11290532.8
(22) Date of filing: 21.11.2011
(51) Int. Cl.: G06F 17/30

(54) **Recommendation method and apparatus for selecting content items for users**

(71) Applicant: Alcatel Lucent, 75007 Paris (FR)
(72) Inventor: Steck, Harald, New Providence, NJ 07974 (US); De Vriendt, Johan A., Afsnee 9051 (BE); De Vleeschauwer, Danny, Evergem, 9940 (BE); Verhoeyen, Marc, Oudenaarde, 9700 (BE)
(74) Representative: Script IP Limited

(57) **Abstract**

A recommended method for selecting content items to be recommended to a user or users includes obtaining a data set of content items in which items are included irrespective of whether or not they have associated user feedback indicating relevance to users. User feedback associated with content items in the data set is used to estimate (a) a user-feature matrix Q of q_{u, k}, with K_u values of k (k = 1, ..., K_u) per user u, representing user profiles and acquired over a first time period prior to a time at which content items are to be recommended to the user or users; and (b) a content-feature matrix P of p_{i, l}, with L_i values of 1 (1=1, ..., L_i) per item i, representing content profiles and acquired over a second time period prior to the time at which content items arc to be recommended to the user or users. The user-feature matrix Q and the content-feature matrix P are used to build a matrix R of estimated rating values r_{i, u} where r_{i, u} = f (q_{u, k}, p_ {i, l}). Higher ranked content items of the matrix R are selected to be recommended to the user or users.

The selected recommendations may be used to determine which content items are to be pre-loaded and /or cached for later access by the user or users.

## Description

### FIELD OF THE INVENTION

The present invention relates to a recommender method and apparatus for selecting content items for a user or users.

### BACKGROUND

Content such as video, music, ebooks, software apps and other types of media may be made available to consumers via several different means. One important approach is content on-demand, in which a user may request content items at a time that is convenient for them. Currently popular services for video delivery include Netflix, Hulu, YouTube and music streaming services include Pandora, Spotify and Last.fm, for example. For video streaming services, the user's quality of experience (QoE) may be partly achieved by allocating sufficient bandwidth to provide a high video quality for the intended display screen.

Providers of on-demand content seek to optimize delivery, for example, by using content caching in content delivery networks (CDNs) or some other technique. Where caching is used, more popular content can be stored in a cache local to the user so that it is more immediately available if the user requests it, thus improving the user's QoE. Also, as content may be sent to the cache at times when the network has greater capacity, such as overnight, it reduces network congestion at peak times.

Content may be chosen for caching using a recommender system to automatically suggest to each user content items that they may find to be of interest. Ideally, each of the recommended items is relevant to a user, an item being relevant to a user if they find it to be 'appealing' or 'interesting'. Different items may be relevant to different users, such that personalization of recommendations is useful.

Techniques other than caching may also seek to improve consumer experience using recommender systems. For example, identifying and recommending content items of interest may be useful for approaches involving delivery of content on demand.

### BRIEF SUMMARY

According to a first aspect of the invention, a recommender method for selecting content items to be recommended to a user or users includes obtaining a data set of content items in which items are included irrespective of whether or not they have associated user feedback indicating relevance to users. User feedback associated with content items in the data set is used to estimate (a) a user-feature matrix Q, comprising user-feature vectors q_{u} with elements q_{u, k}, with K_u values of k (k = 1, ..., K_u) per user u, representing user profiles and is acquired over a first time period prior to a time at which content items are to be recommended to the user or users; and (b) a content-feature matrix P comprising content-feature vectors p_{i} with elements p_{i, 1}, with L_i values of 1 (1=1, ..., L_i) per item i, representing content profiles and acquired over a second time period prior to the time at which content items are to be recommended to the user or users. The user-feature matrix Q and the content-feature matrix P are used to build a matrix R of estimated rating values r_{i, u} where r_{i, u} = f(q_{u, k}, p_ {i, 1}). Higher ranked content items of this matrix R are selected to be recommended to the user or users.

Thus, by using an embodiment, recommendations may be made which are personalized and adaptive over time, for example, to take account of content popularities changing or for other associated time variable features. For example, a music track may become extremely popular over a short time and then fade as another track gains popularity. In one embodiment, the content-feature matrix P may represent popularities of the content items over the second time period. In other embodiments, the content-features matrix P may represent some other parameter associated with the content items, such as the time for which a content item is available for access by users, so that, for example, a content item which has only a short time left for download or streaming, say, is given a larger value than a content item that is not so time-sensitive so that the former will tend to be ranked more highly in matrix R of estimated rating values than the latter. In another embodiment, the content features matrix P may be more complex to allow a plurality of different parameter types to be used when ordering the items. For example, a combination of popularity and available time remaining for access may be used when estimating matrix P.

In an embodiment, the first and second time periods may be of the same duration. They may also coincide, either partially or completely, although in some embodiments this need not be the case. However, the user-feature matrix Q may tend to change more slowly than the content-feature matrix P as user characteristics tend to remain more constant. For example, the likelihood that a particular user will be interested in a certain genre of movies or in a particular actor will tend to be maintained over a relatively long period of time. In one embodiment, the second time period over which the content-feature matrix P is acquired is shorter than the first time period over which the user-feature matrix Q is acquired. In one embodiment, the second time period coincides with part of the first time period but in other embodiments, or at different times in implementing the method in an embodiment, the second time period does not coincide with the first time period.

In one embodiment, K_u is the same for all users. In an embodiment, L_i is the same for all items. In an embodiment, K_u equals L_i. In another embodiment, K_u and L_i are different.

In an embodiment, higher ranked content items of the matrix R which are selected to be recommended to a user or users may be cached for later access by the user or users. Caches may be pre-filled at off-peak times with content that is predicted using a time-aware recommender method.

In another embodiment, higher ranked content items of the matrix R which are selected to be recommended to a user or users may be pre-prepared for delivery in case a user or users acts on recommendations, whereas content items that are not selected for recommendation are not pre-prepared and would require additional processing steps if a user requests them.

A content delivery arrangement may make use of the recommendations selected from the same matrix R, for example, in determining how best to deliver particular content items. However, recommendations need not be used in conjunction with content delivery in order to provide an advantageous experience for users. For example, recommendations could be used to produce a list to which the user may refer when obtaining content items directly themselves, by visiting stores or libraries, for example.

By using a method in accordance with the first aspect of the invention, it may be possible to achieve a large hit ratio, that is, to commend items that then are acted on by the users because they align with their interests. It may provide higher top-k hit rate even when the popularity of content items changes quickly over time, say.

In an embodiment, content-feature matrix P and user-feature matrix Q are estimated using matrix factorization but other methods may be used. Matrix multiplication may be used to build the matrix R but alternative ways of combining matrices P and Q may also yield useful results.

In an embodiment, feedback associated with content items is weighted according to popularity of respective content items when estimating the content-feature matrix P, with higher or equal weight being given for greater popularity.

In an embodiment, the user-feature matrix Q and the content-feature matrix P are updated over time. The updating could be carried out, for example, at regular intervals, irregular intervals, continuously over a time period or a combination of these updating approaches at different times during implementation of a method. In one embodiment, updating could be carried out at regular intervals at a first frequency and then, say, at regular intervals at a higher frequency. This could be useful if rapid changes are detected.

The user-feature matrix Q and the content-feature matrix P may be updated at the same time and at the same frequency in one embodiment. In another embodiment, the content-feature matrix P is updated more frequently than the user-feature matrix Q.

In one embodiment, an AllRank algorithm may be used when estimating matrices Q and P. The AllRank approach to providing data is described in the paper by H. Steck "Training and testing of recommender systems on data missing not at random", ACM Conference on Knowledge Discovery and Data Mining, pages 713-22, 2010 and also in US Patent Application Serial No. 12/841720. In an AllRank algorithm, missing data is used to assist in ranking items. For all missing rating values, an offset value is imputed when using matrix factorization and different weightings used for missing rating values compared to weightings used for observed ratings values.

In an embodiment, ratings are re-estimated as a function of initially estimated ratings, using AllRank or any recommender, and estimated popularity function.

In an embodiment, user feedback associated with content items may include at least one of: implicit rating; explicit user rating; content views, content downloads; and user activity related to content items. Other types of feedback may be used instead or additionally.

In an embodiment, matrix P is estimated after matrix Q has been estimated. According to a second aspect of the invention, a recommendation system comprising a selector for selecting content items to be recommended to a user or users, the selector being operative to implement the method in accordance with the first aspect. In an embodiment, a recommendation system includes means for storing selected content items for later access by a user or users.

By using an embodiment, the 'best' recommendation list for a single person may be estimated in case of recommender system with temporal dynamics. The recommendation list may be used for defining content items to put in cache, as a single user cache, or for example as input for process that defines content items to put in cache, in a multiple user cache, for example.

### BRIEF DESCRIPTION OF THE DRAWINGS

Some embodiments of the present invention will now be described by way of example only, and with reference to the accompanying drawings, in which:
Figure 1 schematically illustrates a method in accordance with the invention; and
Figure 2 schematically illustrates apparatus for implementing the method of Figure 1.

### DETAILED DESCRIPTION

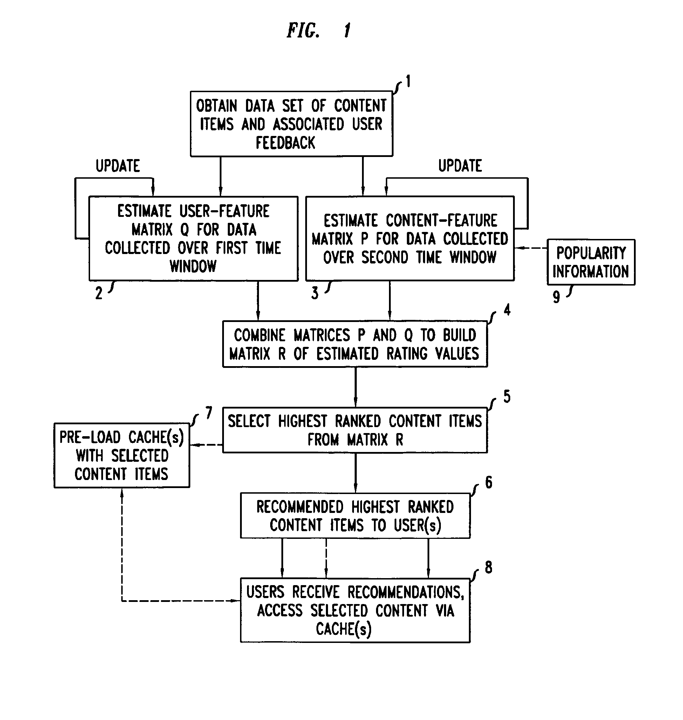

With reference to Figure 1, a data set is obtained at 1 and includes information about content items, which in this embodiment are videos, and associated user feedback. The feedback in this embodiment comprises ratings supplied directly by users or by estimating ratings using observed user behavior. Other forms of user feedback associated with content items may be collected instead of, or in addition to, such ratings. The data set is updated as more information becomes available over time. It is not essential that all content items have associated user feedback to implement the recommender method of this embodiment.

At 2, the associated feedback from the data set obtained at 1 is used to estimate a user-feature matrix Q comprising user-feature vectors q_{u} with elements q_{u, k}, with K_u values of k (k = 1, ..., K_u) per user u, representing user profiles and acquired over a first time period prior to a time at which content items are to be recommended to the user or users.

Similarly, at 3, the associated feedback from the data set obtained at 1 is used to estimate a content-feature matrix P comprisisng content-feature vectors p_{i} with elements p_{i, 1}, with L_i values of 1 (1=1, ..., L_i) per item i, representing content profiles and acquired over a second time period prior to the time at which content items are to be recommended to the user or users.

At 4, matrices Q and P are combined to provide a matrix R of estimated rating values r_{i, u} where r_{i, u} = r(q_{u, k}, p_{i, 1}).

At 5, higher ranked content items of the matrix R are selected. The selected higher ranked content items recommended to a user or users at 6. Additionally, in this embodiment, the selected recommendations are communicated at 7 to a cache management system to enable pre-loading memory caches with the selected content items. The content items are then readily available to users who act on the recommendations at 8.

The data set 1 is updated over time, such that, for example, content items that become more popular with users show more prominently, new content items are added and older content items that are less relevant are removed, or by other mechanisms or combinations of mechanisms. Recommendations to the user or users are updated by updating matrices Q and P, using an updated data set, and combining the updated matrices to provide a revised matrix R. The matrices Q and P may be re-estimated together or, for example, at different intervals. For example, it may be more useful to update content-feature matrix P more frequently than user-feature matrix Q. When one or both matrices are updated, the matrix R of estimated rating values is reconstituted to take account of the updated information and the recommendations updated as necessary.

Although not all content items of the data set need to have associated user feedback to obtain matrices Q and P, in one embodiment, additional ratings are added by applying an AllRank algorithm when estimating matrices P and Q to increase the number of content items having associated feedback. However, use of an AllRank or other algorithm is not an essential feature.

In another embodiment, popularity is explicitly taken into account when estimating content-feature matrix P. Popularity of content may be tracked over time, for example, by monitoring which content items are selected for access by users, or a popularity measure may be derived from how much advertising is devoted to certain content items. Information regarding popularity is gathered at 9 and supplied for use at 3 in estimating P. Feedback associated with content items is weighted according to popularity of respective content items when estimating the content-feature matrix P. In another embodiment, popularity information is extracted from the data set instead of, or in addition, to information provided by a popularity tracker.

In an embodiment, matrix R is re-estimated based on a function of estimated ratings and estimated popularity function. Several updated versions of matrix Q and/or matrix P, for example, may be combined at 4 to obtain matrix R. The combining step at 4 may also use information from popularity tracker 9 when building matrix R.

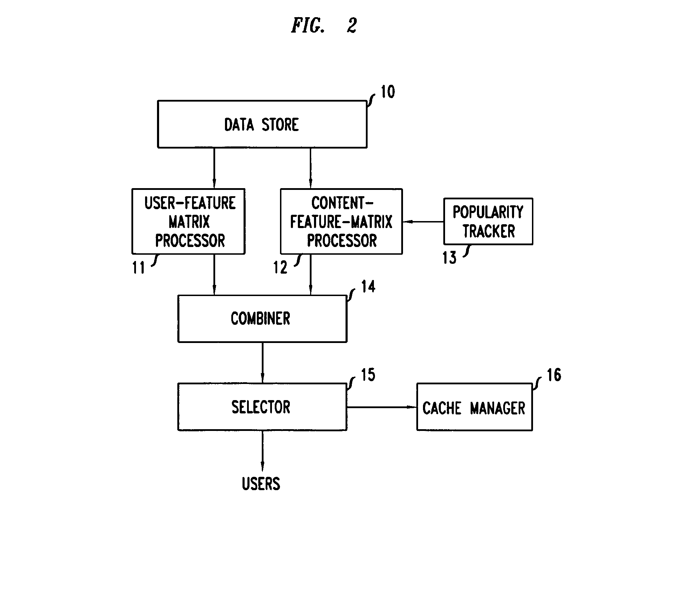

With reference to Figure 2, a recommender system which implements the method described with reference to Figure 1 includes a data store 10 containing information about content items and user feedback associated with at least some of those content items, such as user ratings. The data is updated over time, although this is not essential if recommendations are intended to be based on a fixed data set.

A user-feature matrix processor 11 accesses the data held at 10 and uses it to estimate the user-feature matrix Q over a first time window and may apply an AllRank algorithm or some other mechanism to add missing ratings. A content-feature matrix processor 12 also access the data held at 10 and uses it to estimate the content-feature matrix P over a second time window which is shorter than the first time window and again, an AllRank algorithm may be used. A popularity tracker 13 provides information to the content-feature matrix processor 12 and the processor uses this to weight content that is more popular, more highly when estimating the matrix P. In another embodiment, popularity information is extracted from the intrinsic information included in the data held in data store 10.The estimated matrices Q and P are applied to a combiner 14 which combines them to produce a matrix R of estimated rating values. A selector 15 selects the top rated content items from the matrix R. Information about the selected content items is made available to users and also sent to a cache manager 16 for use in determining what content should be stored at memory caches for later access by users.

Embodiments of the present invention may be implemented at least in part in the form of one or more software programs that are stored in a memory or other computer-readable medium of a processing device of an information processing system. System components may be implemented at least in part using software programs. Of course, numerous alternative arrangements of hardware, software or firmware in any combination may be utilized in implementing these and other system elements in accordance with the invention. For example, embodiments of the present invention may be implemented in one or more field-programmable gate arrays (FPGAs), ASICs, digital signal processors or other types of integrated circuit devices, in any combination. Such integrated circuit devices, as well as portions or combinations thereof, are examples of "circuitry" as the latter term is used herein.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims arc to be embraced within their scope.

## Claims

1. A recommender method for selecting content items to be recommended to a user or users including:
obtaining a data set of content items in which items are included irrespective of whether or not they have associated user feedback indicating relevance to users;
using user feedback associated with content items in the data set to estimate
(a) a user-feature matrix Q of vectors q_{u} with elements q_{u, k}, with K_u values of k (k = 1, ..., K_u) per user u, representing user profiles and acquired over a first time period prior to a time at which content items are to be recommended to the user or users; and
(b) a content-feature matrix P of vectors p_{i} with elements p_{i, l}, with L_i values of 1(1=l, ..., L_i) per item i, representing content profiles and acquired over a second time period prior to the time at which content items are to be recommended to the user or users;
using the user-feature matrix Q and the content-feature matrix P to build a matrix R of estimated rating values r_{i, u} where r_{i, u} = f (q_{u, k}, p_ {i, l}); and
selecting higher ranked content items of the matrix R to be recommended to the user or users.

2. The recommender method as claimed in claim 1 wherein the second time period is shorter than the first time period.

3. The recommender method as claimed in claim 2 wherein the second time period is part of the first time period.

4. The recommender method as claimed in claim 1, 2 or 3 wherein K_u is the same for all users.

5. The recommender method as claimed in any preceding claim wherein L_i is the same for all items.

6. The recommender method as claimed in any preceding claim and including caching selected content items of the matrix R for later access by the user or users.

7. The recommender method as claimed in any preceding claim wherein the matrix P and the matrix Q are estimated using matrix factorization.

8. The recommender method as claimed in any preceding claim wherein matrix multiplication is used to build the matrix R.

9. The recommender method as claimed in any preceding claim and including weighting feedback associated with content items according to popularity of respective content items when estimating the content-feature matrix P .

10. The recommender method as claimed in any preceding claim wherein the user-feature matrix Q and the content-feature matrix P are updated over time.

11. The recommender method as claimed in claim 10 wherein the content-feature matrix P is updated more frequently than the user-feature matrix Q.

12. The recommender method as claimed in any preceding claim and including re-estimating ratings as a function of estimated ratings and estimated popularity function.

13. The recommender method as claimed in any preceding and including applying an all-rank algorithm when estimating matrices Q and P in which missing data is used in providing ratings values.

14. The recommender method as claimed in any preceding claim wherein matrix P is estimated after matrix Q has been estimated.

15. A recommendation system comprising a selector for selecting content items to be recommended to a user or users, the selector being operative to implement the method as claimed in any preceding claim.

16. The recommendation system as claimed in any preceding claim and including means for storing selected content items for later access by a user or users.
